# EUROPÄISCHE PATENTANMELDUNG

(11) **EP 4 390 808 A1**
(43) Veröffentlichungstag der Anmeldung: **26.06.2024**
(21) Anmeldenummer: 22216259.6
(22) Anmeldetag: 22.12.2022
(51) Int. Cl.: G06Q 10/087

(54) **VERFAHREN UND SYSTEM ZUR HANDHABUNG VON PRODUKTSPEZIFISCHEN INFORMATIONEN FÜR EIN PRODUKTSYSTEM**

(71) Anmelder: Siemens Aktiengesellschaft, 80333 München (DE)
(72) Erfinder: Hande, Luke Benjamin, 76332 Bad Herrenalb (DE); Barji, Arastoo, 91052 Erlangen (DE); Pla Maria, Marcos, 10117 Berlin (DE)
(74) Vertreter: Siemens Patent Attorneys

(57) **Zusammenfassung**

Die Erfindung betrifft ein Verfahren und ein entsprechendes System zur Handhabung von produktspezifischen Informationen für ein Produktsystem und ist dadurch gekennzeichnet, dass nach Eingabe eines Datensatzes einer Produktvariante, bevorzugt einer Produktnummer, in eine Eingabeeinrichtung eine mittels produktspezifischen Trainingsdatensätzen zuvor eingelernte Produkthierarchie dazu verwendet wird, produktspezifische Information der Produktvariante zu ermitteln. Die Produkthierarchie entspricht dabei einer Baumstruktur mit mindestens zwei Ebenen, deren Knoten durch Klassifikator ML Modelle gekennzeichnet sind und an deren Ausgängen Wahrscheinlichkeiten von Kategorien der darauffolgenden Ebene vorausgesagt werden. Basierend auf einer Analyse des Produktdatensatzes werden Eingangsvektoren für einen ersten Knoten mit dem ersten Klassifikator Modell erzeugt. Am Ausgang des ersten Modells werden die Wahrscheinlichkeiten der Kategorien der darauffolgenden Ebene vorausgesagt, wobei für die Kategorie mit der höchsten Wahrscheinlichkeit eine relevante Untermenge der Eingangsvektoren als Eingangsvektoren für den nächsten Knoten verwendet wird. Der Vorgang wird so lange wiederholt, bis ein Endknoten erreicht ist, welcher der anhand der Produktnummer ermittelten Produktvariante entspricht. Die im Zusammenhang mit dem Endknoten ermittelte produktspezifische Information der Produktvariante wird einem Anwender auf einer Ausgabeeinrichtung ausgegeben.

## Beschreibung

Die Erfindung betrifft ein Verfahren und ein System zur Handhabung von produktspezifischen Informationen für ein Produktsystem. Des Weiteren betrifft die Erfindung eine entsprechende Anwendungssoftware.

Plant Asset Management-Systeme (PAM) unterstützen einen Betreiber einer verfahrenstechnischen Anlage bei der wirtschaftlichen und technischen Betriebsführung aller Assets der Anlage und ermöglichen eine bessere Handhabung der Assets im Produktionsbetrieb. Dazu gehören auch Produktlebenszyklusmanagement-Systeme (PLM-Systeme) oder Enterprise Ressource Planungssystem (ERP-Systeme), Produktdatenverwaltungssysteme (PDM) oder ähnliche Systeme, hierin kollektiv als Produktsysteme bezeichnet. Dies ermöglicht eine effiziente Steuerung aller Prozesse, höchste Zuverlässigkeit und Effizienz der Assets, eine optimale Verwaltung und Nutzung von Daten und Informationen der Assets im industriellen Umfeld.

Daten und Informationen von Assets umfassen hierbei sämtliche Informationen im Zusammenhang mit dem Asset. Zu einem Asset einer verfahrenstechnischen Anlage, wie beispielsweise einer Pumpe, einem Füllstandssensor oder einem beliebigen Feldgerät existieren üblicherweise eine Vielzahl von Ausführungsvarianten, welche häufig auch als Instanzen oder Geräteinstanzen (genau ein Gerät eines bestimmten Gerätetyps) bezeichnet werden. Eine solche Geräteinstanz oder Gerätevariante ist zum Verkauf mit einer eindeutigen Produktnummer verknüpft und entspricht demnach einer bestimmten Produktvariante. Zu jedem Produkt können produktspezifische Informationen in Form von Dokumenten vorliegen, wie z.B. Inbetriebnahme-, Bedienungs-, Reparatur- und Kalibrieranleitungen, technische Beschreibungen, Zulassungen, Materialzeugnisse, Lieferscheine, Zollerklärungen, Stücklisten und vergleichbare Informationen. Unter den Begriff der produktspezifischen Informationen können auch Produktdaten (Größe, Gewicht, physikalische Größen) und Metadaten (Ort in der technischen Anlage, Umgebungstemperatur) gefasst werden.

Zur Verwaltung der beschriebenen produktspezifischen Informationen in einem Produktsystem ist sowohl ein effizientes Datenmanagement mit einem rechnergestützten Informationssystem und einem entsprechenden Datenbankverwaltungssystem notwendig als auch eine effiziente Interaktion mit den Anwendern. Für alle Anwender der Produktsysteme ist eine einfache Nutzung und ein einfacher, schneller und sicherer Zugriff auf die produktspezifischen Informationen unabdingbar. Umgekehrt muss der Betreiber dafür sorgen, dass die Daten und Informationen aktuell sind und zuverlässig abgelegt und gespeichert sind, insbesondere im Hinblick auf den Produktlebenszyklus, aber auch im Hinblick auf die vielen unterschiedlichen Produktvarianten, welche in diesen Systemen verwaltet werden.

Um die unterschiedlichsten Bedürfnisse von Anwendern zu erfüllen, existieren gerade im industriellen Umfeld sehr kleinteilige Produktanpassungen und Varianten, wie an dem Beispiel eines Füllstandssensors aus der Prozessindustrie demonstrierbar ist. So kann der Sensor kontinuierlich oder diskret messen. Innerhalb dieser Kategorien können wiederum Funktionsanpassungen an dem Sensor vorgenommen sein, beispielsweise kann der kontinuierlich messende Sensor für die Messung von festen Stoffen, Flüssigkeiten oder gasförmigen Stoffen ausgelegt sein. Im Falle eines Sensors zur kontinuierlichen Messung von Füllständen von Flüssigkeiten können ggfs. unterschiedliche Messprinzipien verwendet werden wie optische Messungen, Ultraschall oder hydrostatische Messungen.

Es besteht daher ein großer Bedarf, die produktspezifischen Informationen im Zusammenhang mit den vielen Varianten eines Produktes oder hier insbesondere eines Feldgeräts für einen Anwender eines Produktsystems ebenso kleinteilig abfragbar zu machen, sie aufzufinden, ressourcensparend abzuspeichern oder einfach zu aktualisieren. Die Informationen von Produktvarianten sind häufig versteckt auf untersten Hierarchieebenen abgespeichert, ggfs. sogar verteilt auf unterschiedlichen Servern des häufig modular aufgebauten Produktsystems, was eine Suche nach den Informationen erschwert und zeitaufwendig macht. Zusätzlich ist oft ein weitgehendes Produktwissen notwendig, um überhaupt eine Produktnummer und eine der zuvor beschriebenen Information zu dem Produkt zu korrelieren oder einen Zusammenhang herzustellen. Es stellt demnach eine besondere Herausforderung dar, die Informationen und Daten im Zusammenhang mit einer Vielzahl von Produktvarianten in einem Produktsystem zu handhaben. Hierbei soll das Produktsystem auch Informationsaustauschplattformen (IEP), welche in der Regel cloudbasiert ausgeführt sind und aus einer Vielzahl von Servern bestehen, umfassen.

Es ist daher die Aufgabe der vorliegenden Erfindung, ein verbessertes Verfahren und System zur Handhabung von produktspezifischen Informationen in einem Produktsystem anzugeben, welches intelligent sowohl einen Anwender bei seiner Interaktion mit dem System unterstützt und gleichzeitig ein ressourcenschonendes Informationsmanagement erlaubt.

Diese Aufgabe wird durch die Merkmale des unabhängigen Patentanspruchs 1 gelöst. Die Aufgabe wird ferner durch ein System gemäß Anspruch 7 und eine Anwendersoftware gemäß Anspruch 8 gelöst. In den abhängigen Ansprüchen sind vorteilhafte Weiterbildungen der Erfindung beschrieben.

Die Erfindung basiert auf der Erkenntnis, dass jede Produktvariante über eine eindeutige Produktnummer verfügt, die in der Regel einem spezifischen, häufig firmeninternen Standard eines Herstellers folgt, der das Format und die Struktur dieser Produktnummern festlegt. Jeder Hersteller hat sein eigenes Nummerierungssystem entwickelt. Häufig sind nur Experten, die mit der jeweiligen Produktnummernstruktur vertraut sind, in der Lage, die Produktnummern interpretieren zu können. Dieses Wissen wird nun erfindungsgemäß in einer künstlichen Intelligenz abgebildet. Mittels dieser künstlichen Intelligenz kann eine Übersicht über die Produktfamilie eines Herstellers in Form einer Produkthierarchie hergeleitet werden, welche vielfältig einsetzbar ist.

Erfindungsgemäß wird demnach ein Ensemble aus Algorithmen des Maschinellen Lernens (engl. machine learning, abgekürzt ML) verwendet, das Produktvarianten in einer Produkthierarchie klassifiziert. Die Produkthierarchie entspricht erfindungsgemäß einer Baumstruktur mit mindestens zwei Ebenen, deren Knoten durch Klassifikator ML Modelle gekennzeichnet sind und an deren Ausgängen Wahrscheinlichkeiten von Kategorien der darauffolgenden Ebene vorausgesagt werden. Nach Eingabe eines Datensatzes einer Produktvariante, bevorzugt einer Produktnummer, in eine Eingabeeinrichtung, wird die mittels produktspezifischer Trainingsdatensätzen zuvor eingelernte Produkthierarchie dazu verwendet, die Kategorien von Produktvarianten zu ermitteln. Dabei werden zunächst basierend auf einer Analyse des Produktdatensatzes Eingangsvektoren für einen ersten Knoten mit dem ersten Klassifikator Modell erzeugt. Daraufhin werden am Ausgang des Modells die Wahrscheinlichkeiten der Kategorien der darauffolgenden Ebene vorausgesagt, wobei für die Kategorie mit der höchsten Wahrscheinlichkeit eine relevante Untermenge der Eingangsvektoren als Eingangsvektoren für den nächsten Knoten verwendet wird. Der Vorgang wird so lange wiederholt, bis ein Endknoten erreicht ist, welcher der anhand der Produktnummer ermittelten Produktvariante entspricht. Die im Zusammenhang mit dem Endknoten ermittelte produktspezifische Information der Produktvariante wird einem Anwender auf einer Ausgabeeinrichtung ausgegeben.

Die erfindungsgemäße Lösung stellt vorteilhaft ein vollständig datengesteuertes Verfahren zur automatischen Klassifizierung von Produkten in eine Produkthierarchie dar. Sie lässt sich auf jede beliebige Struktur von Eingangsdatensätzen anpassen und kann beliebige baumartige Beziehungen zwischen Produktvarianten herstellen. Insbesondere lässt sich diese automatische Klassifizierung von Produkten in eine Produkthierarchie zur verbesserten Handhabung produktspezifischer Informationen in einem Produktsystem nutzen. Die produktspezifischen Informationen im Zusammenhang mit den vielen Varianten eines Produktes wie beispielsweise einem Feldgerät sind auf diese Weise für einen Anwender eines Produktsystems besser abfragbar, auffindbar, ressourcensparend abspeicherbar und einfacher zu aktualisieren. Eine Suche nach den Informationen in einem Produktsystem kann somit erleichtert werden. Abfragen im Zusammenhang mit einer Vielzahl von Produktvarianten können somit in einem Produktsystem unterstützt werden.

In einer vorteilhaften Ausführungsvariante werden Datensätze von Produktvarianten hinsichtlich Separierungsmerkmalen untersucht und mittels dieser in Teile aufgeteilt. Eigenschaften dieser Teile werden ermittelt und Ähnlichkeiten zwischen den Teilen bestimmt. Auf den Ähnlichkeitswerten basierend werden Statistiken erstellt. Mittels dieser statistischen Werte werden die Komponenten der Eingangsvektoren für die Klassifikator Modelle ermittelt. Die Analyse des eingegebenen Produktdatensatzes und darauf basierend die Ermittlung der Eingangsvektoren ermöglicht vorteilhaft, dass nach dem Training des Ensembles aus Klassifikator Modellen für die Vorhersage neuer Kategorien lediglich ein produktspezifischer Datensatz wie eine Produktnummer benötigt wird. Es werden keine zusätzlichen Informationen benötigt. Die Eingangsvektoren für jeden Klassifikator werden somit allein aus den Eigenschaften der Produktnummern generiert. Das erfindungsgemäße Verfahren wird dadurch so flexibel, dass es auf jegliche Datenstrukturen als Eingangsdatensatz angewendet werden kann.

Zum Einlernen der Produkthierarchie wird vorteilhaft eine Vielzahl von Datensätzen von Produktvarianten als Trainingsdatensätze verwendet. Basierend auf einer Analyse jedes Trainingsdatensatzes werden zunächst die entsprechenden Eingangsvektoren erzeugt. Alle Eingangsvektoren und die Kategorien der darauffolgenden Ebene als Labels werden dann auf den ersten Knoten mit dem ersten Klassifikator Modell angewandt. Am Ausgang des Modells werden die Wahrscheinlichkeiten der Kategorien der darauffolgenden Ebene vorausgesagt. Entsprechend der ermittelten Wahrscheinlichkeiten werden ein Subset der Eingangsvektoren und die entsprechenden Labels auf die folgenden Knoten angewandt und dieser Vorgang wird für alle Knoten und Ebenen so lange wiederholt, bis in der untersten Ebene der Produkthierarchie die Wahrscheinlichkeiten für alle Kategorien bestimmt sind.

Durch die Auswahl der Label, die ja im Wesentlichen den Kategorien der Produkthierarchie und somit den Knoten der Baumstruktur entsprechen, können beliebige Produkthierarchien erzeugt werden. Je mehr Datensätze zum Einlernen vorhanden sind, desto besser und zuverlässiger wird die Vorhersage der einzelnen Klassifikator Modelle. Nach dem Einlernvorgang werden nach Eingabe neuer, zuvor unbekannter produktspezifischer Datensätze, die passenden Kategorien der Produktvariante vorausgesagt.

In einer besonders vorteilhaften Ausführungsvariante wird für das Klassifikator Modell ein Random Forrestoder einen Gradient Booster Klassifikationsalgorithmus verwendet. Die Klassifizierungsleistung dieser ML Modelle ist besonders gut und zuverlässig. Außerdem ist es vorteilhaft, dass die Modelle neben der Klassifizierung auch eine Wahrscheinlichkeit ausgeben, welche Klassifizierung vorkommen wird. Auf diese Weise verbessert sich die Performance des Gesamtsystems nachhaltig.

In einer besonders vorteilhaften Ausführung des erfindungsgemäßen Verfahrens werden die Informationen im Zusammenhang mit allen Produktvarianten in einer Datenbank gespeichert und der Speicherplatz mit dem Pfad durch die Produkthierarchie verknüpft. Ein Anwendungsfall dieser Ausführungsvariante ist die Abspeicherung von Dokumentation von Gerätevarianten. Anstatt die gesamte Dokumentation der Produktvarianten den untersten Ebenen der Hierarchie zuzuordnen und an mehreren Stellen abzuspeichern, kann sie nun einer höheren Ebene der Hierarchie zugeordnet und zentral in einer Datenbank gespeichert werden. Vorteilhaft kann die Dokumentation für ein Produkt der untersten Ebene der Produkthierarchie angefordert werden, und unter Verwendung des erfindungsgemäßen Verfahrens kann die Dokumentation beispielsweise in einer Datenbank abgerufen werden, die auf einer höheren Ebene in der Produkthierarchie gespeichert ist. Dadurch wird die Menge an doppelter Dokumentation und deren Speicherplatz signifikant reduziert.

In einer besonders vorteilhaften Ausführungsvariante kann die im Zusammenhang mit einer Produktnummer ermittelte Position in der Produkthierarchie und/oder die Produkthierarchie selbst als Baumdiagramm und/oder mindestens ein ermittelter Pfad zu einem Knoten einem Anwender ausgegeben werden. Die im Zusammenhang mit der Produktnummer ermittelte Position in der Produkthierarchie kann einen Anwender eines Produktsystems beim Informationsund Dokumentenmanagement unterstützen und dieses effizienter machen. Eine Anzeige der Produkthierarchie selbst als Baumdiagramm kann einen Anwender eines Produktsystems einen Überblick über eine Produktfamilie geben und damit beispielsweise zum schnelleren Auffinden von Ersatzteilen führen. Die Anzeige mindestens eines ermittelten Pfads zu einem Knoten der Produkthierarchie kann die Abspeicherung von Informationen verbessern. Ein Pfad durch die Baumstruktur der Produkthierarchie kann beispielsweise als Dateipfad zur Abspeicherung von produktspezifischen Informationen verwendet werden. Die Knoten können eindeutige Speicherorte repräsentieren.

Ferner ist eine Realisierung der Erfindung oder einer beschriebenen Weiterbildung möglich durch ein System, welches mindestens eine Eingabeeinrichtung zur Eingabe eines Datensatzes einer Produktvariante, bevorzugt einer Produktnummer, und mindestens einer Ausgabeeinrichtung zur Ausgabe von produktspezifischen Informationen, welche im Zusammenhang mit dem Eingabedatensatz stehen, umfasst. Das System umfasst ferner mindestens einen Prozessor, der dafür konfiguriert ist, mindestens eine Anwendungssoftwarekomponente aus einem Speicher in Interaktion mit einer Datenbank auszuführen, wobei die Anwendungssoftwarekomponente Verfahrensschritte gemäß einem der Ansprüche 1 bis 7 durchführt. Ein solches System kann sowohl cloudbasiert als auch auf lokalen Servern ausgeführt sein oder in der Form, dass einzelne Komponenten auf Servern lokal und in der Cloud verteilt sind. Insbesondere die Anwendungssoftwarekomponente könnte in einer Cloudumgebung untergebracht sein.

Solche Software-Systeme oder Software-Applikationen werden heutzutage häufig cloudbasiert mittels so genannter Software as a service (SaaS) bereitgestellt. Der Anbieter übernimmt in diesem Fall Aufgaben wie das Abspeichern und Aktualisieren der Information, sodass der Kunde oder Anwender solcher Systeme sich allein auf die angebotenen Funktionen konzentrieren kann.

Im Folgenden wird die Erfindung anhand der in den Figuren dargestellten Ausführungsbeispiele näher beschrieben und erläutert.

Darin zeigen, jeweils in vereinfachter schematischer Darstellung
- FIG. 1: ein Beispiel einer Produkthierarchie mit fünf Ebenen für einen Füllstandssensor einer verfahrenstechnischen Anlage
- FIG. 2: zwei Skizzen zur Veranschaulichung der Ermittlung von Eingangsvektoren für ein ML Modell mittels Analyse von Produktnummern gemäß einer beispielhaften Ausführungsform der vorliegenden Erfindung
- FIG. 3: eine Skizze zur Veranschaulichung der Vorgehensweise beim Einlernen der ML Modelle gemäß einer beispielhaften Ausführungsform der vorliegenden Erfindung
- FIG. 4: ein Ausführungsbeispiel einer Vorrichtung zur Durchführung des erfindungsgemäßen Verfahrens
- FIG. 5: Beispiele eines Ergebnisses nach Durchführung des erfindungsgemäßen Verfahrens.

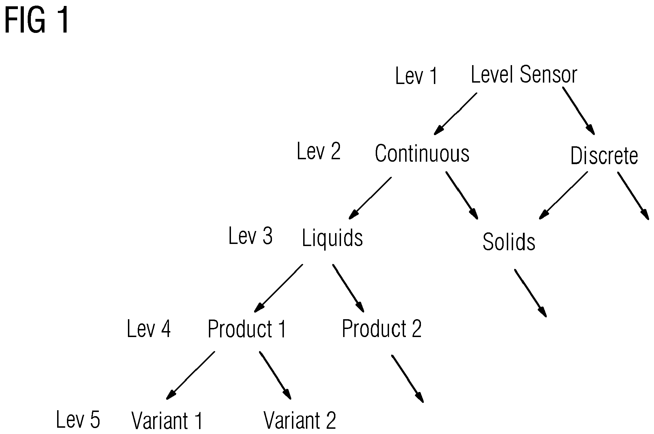

**Figur 1** zeigt ein Beispiel einer Produkthierarchie mit fünf Ebenen für einen Füllstandssensor, wie er beispielsweise in verfahrenstechnischen Anlagen der Prozessindustrie eingesetzt wird. Es handelt sich dabei um eine baumstrukturierte Klassifizierungshierarchie. Gemäß der Internetseite https://help.sap.com/docs/CARAB/e95c8443f58948 6bbfec9933104 97 04a/c8df9b515d18c10fe10000000a445394.html?version=5.0 der Firma SAP wird eine Produkthierarchie folgendermaßen definiert: Eine Produkthierarchie ist eine Modellierung der hierarchischen Beziehungen zwischen Produkten in einer Baumstruktur. Durch eine Produkthierarchie können Produkte gruppiert und die Beziehung zwischen Produkten und Gruppen auf unterschiedlichen Hierarchieebenen definiert werden (z.B. Lebensmittel - Tiefkühlprodukte - Pizza).

In dem hier gezeigten Beispiel einer Produkthierarchie findet sich auf der obersten Ebene Lev 1 der Begriff des Füllstandssensors (engl. Level Sensor) im Allgemeinen. Hier sei erwähnt, dass in diesem Ausführungsbeispiel die Produkthierarchie nur für die Produkte einer Firma oder eines Herstellers erstellt wird. Füllstandssensoren können entweder kontinuierlich oder diskret verwendet werden. Diese Eigenschaften spiegeln sich in der zweiten Ebene Lev 2 wieder. Bestimmte Eigenschaften oder Merkmale können demnach werden in einer eigenen Produkthierarchieebene abgebildet werden. In jeder Ebene können die Eigenschaften einem Knoten zugewiesen werden. Hier sind die beiden Knoten in der Ebene Lev 2 mit "Continuous" (engl. für kontinuierlich) und "Discrete" (engl. für diskret) bezeichnet. Jeder Knoten der Baumstruktur kann nun gemäß bestimmter funktioneller Eigenschaften in weitere Aspekte oder Klassen unterteilt werden, was sich in der Bezeichnung der Knoten der darunterliegenden Ebene widerspiegelt. In dem gezeigten Beispiel wird die Produkthierarchie nur für die kontinuierlich messenden Füllstandssensoren weitergeführt. Je nach Aggregatszustand der Materialien, deren Füllstand zum Beispiel in einem Reaktor der chemischen Industrie bestimmt werden soll, können in Ebene 3 (hier Lev 3) die Eigenschaften "Liquids", also Flüssigkeiten, und "Solids", also Feststoffe, unterschieden werden. Für Füllstandssensoren, die für Flüssigkeiten verwendet werden, existieren bei einer Firma, für deren Produkte die Produkthierarchie erstellt wird, in dieser Ausführungsvariante zwei Produkte: Product 1 und Product 2. Sie finden sich in der Bezeichnung der Knoten der Baumstruktur auf der vierten Ebene Lev 4 wieder. Das Produkt 1 (Product 1) lässt sich weiterhin in weitere Varianten klassifizieren. In der fünften Ebene Lev 5 der Baumstruktur sind daher die Produktvarianten "Variant 1" und "Variant 2" zu finden. Die Anzahl der Knoten in der untersten Ebene der Produkthierarchie entspricht somit der Anzahl aller Produktvarianten.

Die durch die Produkthierarchie vorgegebene Baumstruktur wird nun erfindungsgemäß dazu verwendet, produktspezifische Informationen besser zu handhaben. Dazu wird ein Maschine Learning (ML) Algorithmus verwendet. Besonders geeignet für die Durchführung des erfindungsgemäßen Verfahrens sind jegliche Arten von Klassifikator-Modellen, wie zum Beispiel ein Random Forrest, oder ein so genannter gradient boosting classification algorithm. Diese Modelle haben nachweislich eine gute Klassifizierungsleistung für eine Vielzahl von Aufgaben und den Vorteil, eine Wahrscheinlichkeit vorherzusagen. Prinzipiell kann jedes Klassifikationsmodell als Basismodell verwendet werden, jedoch ist ein Modell, das Wahrscheinlichkeiten ausgibt, am besten geeignet.

Wird nun eine Baumstruktur erstellt, an deren Knotenpunkten die zuvor genannten Klassifikator-Modelle angeordnet sind, so lassen sich an jedem Knotenpunkt für einen Eingangsvektor am Ausgang des Knotens (des ML Modells) Wahrscheinlichkeiten für bestimmte Klassen oder Kategorien voraussagen. Werden die Klassifikator-Modelle gemäß einer zuvor bekannten Produkthierarchie zu einem Ensemble verknüpft und wird dieses Ensemble entsprechend eingelernt, so kann die Position einer Produktvariante in der Hierarchie vorausgesagt werden. Erfindungsgemäß wird der für die ML Modelle benötigte Eingangsvektor für einen Knoten der obersten Ebene allein aus einem Datensatz mit einem produktspezifischen String abgeleitet. In der hier beschriebenen Ausführungsform wird als produktspezifischer String ein Datensatz einer Produktvariante wie beispielsweise eine Produktnummer verwendet.

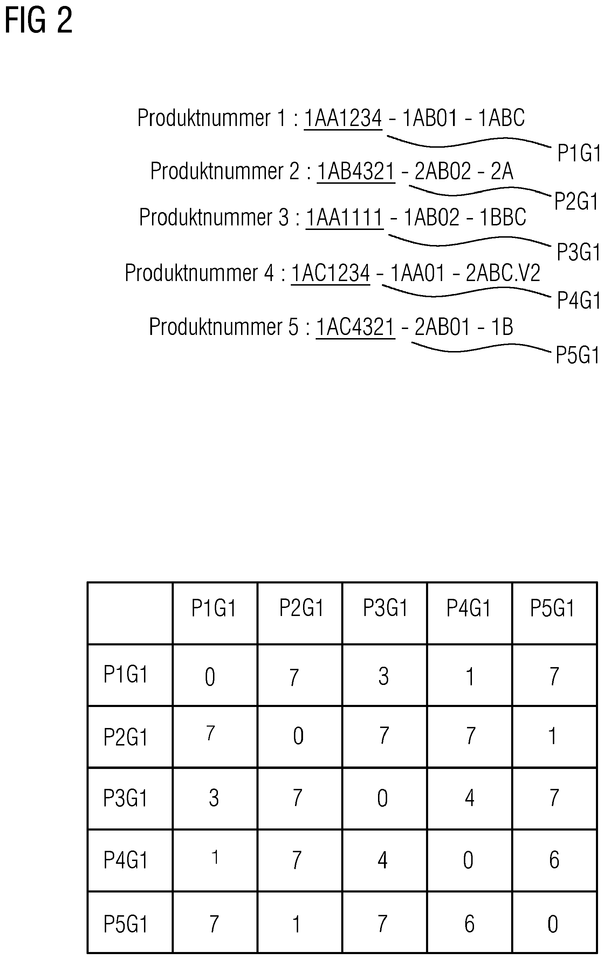

Die Eingangsvektoren für jeden Klassifikator werden allein aus den Eigenschaften der Produktnummern generiert und erfordern keine zusätzlichen Informationen. Die Produktnummern können beliebig aufgebaut sein und aus einer Serie von unterschiedlichen Buchstaben, Zahlen und Satzzeichen bestehen. In **Fig. 2** sind im oberen Teil fünf Beispiele von möglichen Produktnummern genannt. Auf diesen Datensätzen baut das erfindungsgemäße Verfahren auf. In diesem Beispiel bestehen die Datensätze der Produktnummern aus mehreren Gruppen von Buchstaben und Zahlen, getrennt durch einen Bindestrich. Bei dem Trennungszeichen oder Separierungsmerkmal können beliebige Satzzeichen wie ein Punkt oder ein Doppelpunkt verwendet werden. Die verschiedenen Gruppen enthalten Informationen, welche die hierarchische Struktur von Produkten beschreiben. Die erste Zeichengruppe könnte Informationen über den Sensortyp enthalten. Die zweite Zeichengruppe, die zwischen dem ersten und zweiten Bindestrich vorkommt, könnte Informationen über die Sensorvariante enthalten. Die dritte Zeichengruppe könnte Informationen über die spezifische Konfiguration enthalten. Die Anzahl der Gruppen könnte somit eine Mindestanzahl an Kategorien definieren, die erhalten wird, wenn alle Produktnummern bei den Trennungszeichen getrennt werden.

Die Struktur der Datensätze werden zur Herleitung der Eingangsvektoren eingehend analysiert. Dazu werden pro Gruppe die Struktur jedes Teildatensatzes zwischen den Separierungsmerkmalen für sich gesondert und in Hinblick auf jeden anderen Teildatensatz betrachtet. In Fig. 2 werden beispielsweise aus den fünf Produktnummer-Datensätzen drei Gruppen pro Datensatz getrennt, und die Merkmale jeder Gruppe werden auf der Grundlage von Ähnlichkeitsbetrachtungen aller Mitglieder jeder Gruppe berechnet. Beispielsweise kann die Levenshtein-Distanz berechnet werden, um die Ähnlichkeit zwischen den Zeichenfolgen der ersten Gruppe für allen Produktnummern zu berechnen. Dazu wird für die Zeichenfolgen aller Datensätze der ersten Gruppe eine Ähnlichkeitsmatrix erstellt (Fig. 2 unten), in der die einzelnen Zeichenfolgen P1G1 (= 1AA1234), P2G1 (=1AB4321), P3G1 (=1AA1111), P4G1 (= 1AC1234) und P5G1 (=1AC4321) miteinander gemäß einer Editierdistanz verknüpft sind. Die Zeichenfolge P1G1 bezieht sich beispielsweise auf die Produktnummer 1 der Gruppe 1. Für die anderen zuvor identifizierten Gruppen werden ebenfalls Ähnlichkeitsmatrizen erstellt und berechnet. Aus den Matrixelementen jeder Matrix lassen sich nun charakteristische, statistische Werte berechnen. Zum Beispiel werden für jede Spalte jeder Ähnlichkeitsmatrix der Mittelwert, der Median und die Standardabweichung berechnet. Diese Werte geben an, wie ähnlich eine Zeichenfolge (hier ein Teil einer Produktnummer) im Vergleich zu allen anderen ist. Alternativ oder zusätzlich können als Merkmale auch die Länge der Produktnummer, der Anzahl der Zeichen insgesamt, und die Anzahl der Zahlen oder Buchstaben berechnet. All diese Werte können zur Charakterisierung eines Produktdatensatzes beitragen. Die berechneten Werte werden anschließend als Vektorkomponenten eines Eingangsvektors einer bestimmten Länge ( = Anzahl der Werte) bestimmt. Die Eingangsvektoren (engl. input features) werden sowohl zum Einlernern der ML Modelle benötigt als auch zum Durchführung des erfindungsgemäßen Verfahrens.

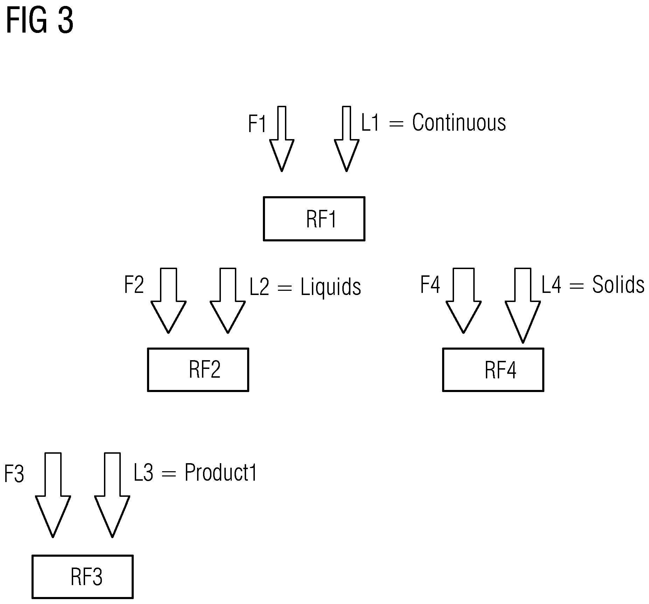

Das Einlernen der Baumstruktur einer Produkthierarchie wird anhand von **Fig. 3** verdeutlicht. Erfindungsgemäß handelt es sich bei einer Produkthierarchie um eine Baumstruktur mit mindestens zwei Ebenen, deren Knoten durch Klassifikator ML Modelle gekennzeichnet sind und an deren Ausgängen Wahrscheinlichkeiten von Kategorien der darauffolgenden Ebene vorausgesagt werden. Zum Einlernen einer solchen Produkthierarchie wird eine Vielzahl von Datensätzen von Produktvarianten als Trainingsdatensätze benötigt. Die Trainingsdatensätze werden gemäß ihrer Struktur analysiert und daraus werden wie zuvor beschrieben die Eingangsvektoren erzeugt. Ein derart erzeugter Eingangsvektor F1 wird zusammen mit einem so genannten Label L1 (engl. für Etikett, Attribut) auf das erste ML Klassifikator-Modell RF1 (erster Knoten der gezeigten Baumstruktur) angewandt. Als "Labels" werden im Supervised Machine Learning die Kategorien von Daten bezeichnet, in die die Datensätze eingeordnet werden sollen. Somit sind die Labels die Kategorie oder der Output auf den das Machine Learning Modell trainiert wird. Die Labels werden zuvor manuell oder automatisch aus Rohdaten erzeugt werden, in welchen in diesem Ausführungsbeispiel eine Zuordnung der einzelnen Ebenen und deren Kategorien zu den Produktnummern enthalten ist.

In dem in Fig. 3 gezeigten Beispiel lehrt das erste Klassifikatormodell den Zusammenhang zwischen dem Eingangsvektor F1 und dem Label L1 ("continuous"). Da es sich aufgrund des verwendeten Modelltyps um Wahrscheinlichkeiten handelt, mit denen die Kategorien der darauffolgenden Ebene der Baumstruktur vorausgesagt werden, könnte das Ergebnis am Ausgang des Modells RF1 derart aussehen, dass mit einer 70%igen Wahrscheinlichkeit die Kategorie "Liquids" und mit einer 30%igen Wahrscheinlichkeit die Kategorie "Solids" der darauffolgenden Ebene vorausgesagt werden. In einem nächsten Schritt werden entsprechend der ermittelten Wahrscheinlichkeiten ein Subset der Eingangsvektoren und die entsprechenden Labels auf die ML Klassifikator-Modelle der in der folgenden Ebene angeordneten Knoten angewandt. Der Eingangsvektor F2 (= Subset von F1) wird zusammen mit dem Label L2 = "Liquids" auf den Random Forrest RF2 angewandt und der Eingangsvektor F4 (= Subset von F1) wird zusammen mit dem Label L4 = "Solids" auf den Random Forrest RF4 angewandt usw. Dieser Vorgang wird für alle Knoten und Ebenen so lange wiederholt, bis in der untersten Ebene der Produkthierarchie die Wahrscheinlichkeiten für alle Kategorien bestimmt sind.

Sobald das System mit einem ausreichend großen Datensatz trainiert ist, der Produktnummern mit den entsprechenden Kategorien als Labels enthält, kann der KlassifikationsAlgorithmus im laufenden Betrieb eines Produktsystems eingesetzt werden. Auch hier werden die Klassifikations-Vorhersagen sukzessive erstellt. Zunächst werden alle Produktnummern berücksichtigt, und die Eingangsvektoren werden wie oben beschrieben erzeugt. Diese werden an den Klassifikator der ersten Ebene (Lev 1) gegeben, der die Produktnummer in die direkt darunter liegenden Kategorien einordnet. Dann wird eine relevante Teilmenge des Eingangsvektors aus der vorhergesagten Kategorie (= Kategorie mit der höchsten Wahrscheinlichkeit) entnommen und in den Klassifikator der zweiten Ebene (Lev 2) eingegeben. Dieser Prozess wird fortgesetzt, bis die Produktnummern vollständig klassifiziert sind.

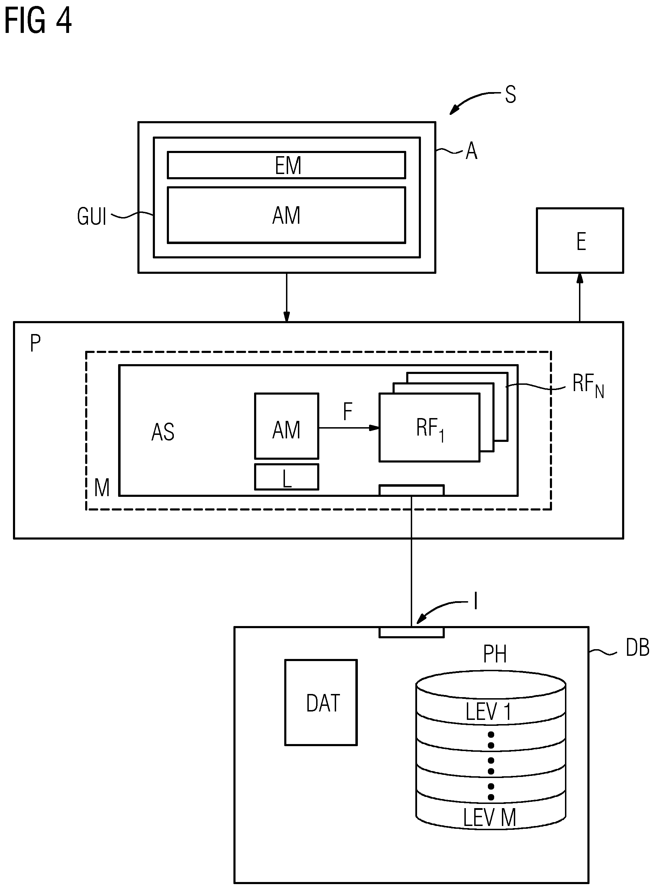

In **Fig. 4** zeigt ein Funktionsblockdiagramm eines beispielhaften Systems S zur Handhabung von produktspezifischen Informationen, welches für ein Produktsystem geeignet ist. Das System S kann mindestens einen Prozessor P, einen Speicher M und mindestens eine Anwendungssoftwarekomponente AS umfassen. Die Anwendungssoftwarekomponente AS kann konfiguriert (d. h. programmiert) sein, um den Prozessor P zu veranlassen, das erfindungsgemäße Verfahren auszuführen. Ferner kann die Anwendungssoftwarekomponente AS selbst eine oder mehrere Softwarekomponenten umfassen und über die Schnittstelle I mit einer zu dem System S gehörigen oder einer externen Datenbank DB interagieren.

Bei den Softwarekomponenten der Anwendungssoftwarekomponente AS kann es sich beispielsweise um ein Analysemodul AM handeln, das basierend auf einer Analyse eines Produktdatensatzes Eingangsvektoren F für ein Ensemble aus ML Klassifikator Modellen RF1 bis RFN, welches einer Produkthierarchie entspricht, erzeugt. Zum Einlernen des Ensembles aus ML Klassifikator Modellen werden neben produktspezifischen Trainingsdatensätzen DAT, die in diesem Ausführungsbeispiel aus der Datenbank DB stammen, auch die mit den verschiedenen Ebenen der Produkthierarchie zusammenhängenden Labels L benötigt. Mittels der ML Klassifikator Modellen wird für die Produktnummer oder einen produktspezifischen Datensatz die zugehörige Kategorie der darauffolgenden Ebene in der Produkthierarchie vorausgesagt. Ist diese Information, welche mit einem Pfad durch die Produkthierarchie übereinstimmt, bekannt, so kann sie beispielsweise zum Abspeichern von Informationen im Zusammenhang mit dieser Produktvariante verwendet werden.

Dazu ist zwischen der Anwendungssoftwarekomponente AS und der Datenbank DB in diesem Ausführungsbeispiel eine Schnittstelle I zum bidirektionalen Austausch von Daten vorgesehen. Die Datenbank DG kann neben produktspezifischen Daten DAT einen gemäß der in der Anwendungssoftware AS ermittelten Klassifizierung ausgeführten Datenspeicher PH mit einer Vielzahl von Ebenen Lev 1 bis Lev M umfassen. Statt vieler verteilter Datenspeicher ist nun nur noch ein einziger Datenspeicher notwendig, in dem Daten oder Informationen erfindungsgemäß gehandhabt werden können. Beispielsweise können in PLM-Datenbanken Objekte oder in diesem Ausführungsbeispiel Produktvarianten in eine spezifische Kategorie (z. B. Bibliotheksknoten) einer baumstrukturierten Klassifizierungshierarchie wie einer Produkthierarchie klassifiziert werden, in der Attributwerte (Labels), die Produkten zugeordnet sind, verwendet werden, um die Schlüsselmerkmale eines Produktes zu erfassen und anschließend verwendet werden können, um eine produktspezifische Information einer Produktvariante zu finden, abzuspeichern oder auszugeben. Demnach kann die Datenbank DB beispielsweise Teil eines Produkt Lifecycle Management Systems (PLM Systems) sein oder mit einem solchen verbunden sein. Auch sind Datenbankserveranwendungen oder jede andere Art von Datenspeichern umfasst, die zum Speichern von Datensätzen betreibbar sind.

Um es der beschriebenen Anwendungssoftwarekomponente AS zu ermöglichen, die erfindungsgemäßen Merkmale auszuführen, kann die Vorrichtung S ferner mindestens eine Eingabeeinrichtung E zur Eingabe eines Datensatzes einer Produktvariante, bevorzugt einer Produktnummer, und mindestens eine Ausgabeeinrichtung A zur Ausgabe von produktspezifischen Informationen, welche im Zusammenhang mit dem Eingabedatensatz stehen, aufweisen. Der Prozessor P kann ferner konfiguriert sein, um eine graphische Benutzeroberfläche GUI durch die Anzeigevorrichtung A zu erzeugen. Eine solche GUI kann GUI-Elemente wie eine Textbox als Eingabemaske EM beinhalten, die von einem Benutzer oder Anwender verwendet werden können, um Eingaben durch die Eingabeeinrichtung E bereitzustellen. Ferner kann eine Ausgabemaske AM vorgesehen sein, um beispielsweise Informationen im Zusammenhang mit einer Produkthierarchie, eine graphische Darstellung einer Produkthierarchie selbst oder um im Zusammenhang mit dem Endknoten der Produkthierarchie ermittelte produktspezifische Informationen einer Produktvariante auszugeben.

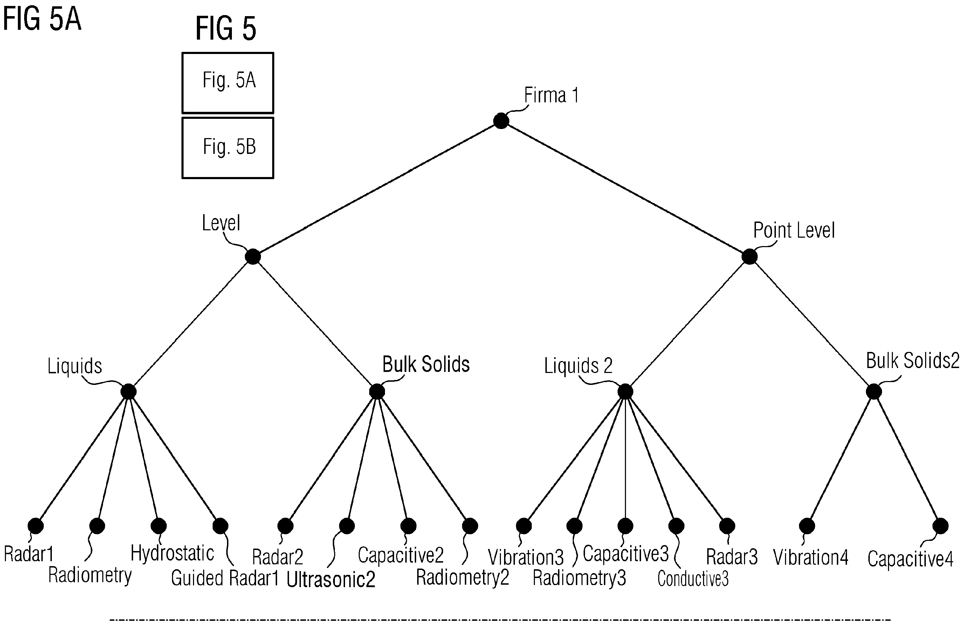

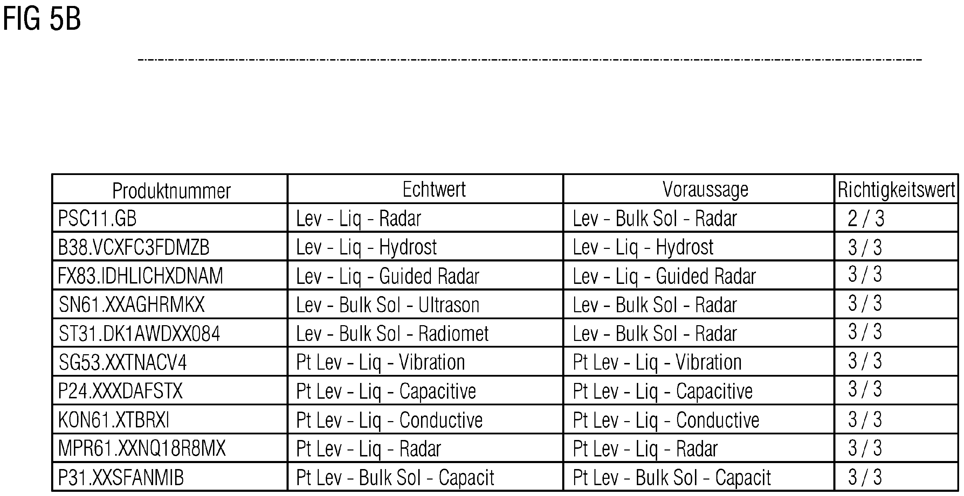

In **Fig. 5** sind zwei Beispiele von solchen Ausgaben gezeigt, welche mittels des erfindungsgemäßen Verfahrens ermittelt und auf einer GUI einer Ausgabeeinheit angezeigt werden können. In Fig. 5A ist beispielhaft eine Baumstruktur einer Produktfamilie einer Firma 1 demonstriert. Unterhalb des Startknotens "Firma 1" sind die Produkte nach ihren Eigenschaften klassifiziert, so dass sich in diesem Fall drei Ebenen mit den entsprechenden Kategorien ergeben. Zum Einlernen des Produktfamilienbaums wurden hier Datensätze von 828 Produkten mit ihren Produktnummern und -bezeichnungen verwendet. Die Daten erscheinen relativ gleichmäßig auf die Knoten verteilt.

Gemäß der vorliegenden Erfindung entspricht die Produkthierarchie einer Baumstruktur mit mindestens zwei Ebenen, deren Knoten durch Klassifikator ML Modelle gekennzeichnet sind, an deren Ausgängen Wahrscheinlichkeiten von Kategorien der darauffolgenden Ebene vorausgesagt werden.

Zur Überprüfung des ML Algorithmus sind in Fig. 5B in einer Tabelle die Produktnummer einer Produktvariante und die zugehörigen Pfade durch die Baumstruktur der Produkthierarchie bis zu dem jeweiligen Endknoten, der im Zusammenhang mit der Produktvariante steht, angegeben. In der Spalte "Echtwert" ist der "richtige" Pfad angegeben, so wie er gemäß der Produkthierarchie sein soll. In der Spalte "Voraussage" ist der Pfad angegeben, wie er sich aus dem ML Algorithmus des erfindungsgemäßen Verfahrens ergibt. Der "Richtigkeitswert" in der letzten Spalte der Tabelle gibt an, inwieweit die Pfade übereinstimmen. Von 30 Voraussagen der Klassifikator ML Modelle war nur eine der Voraussagen falsch, was die hohe Verlässlichkeit des ML Algorithmus beweist.

## Patentansprüche

1. Verfahren zur Handhabung von produktspezifischen Informationen für ein Produktsystem,
**dadurch gekennzeichnet,**
- **dass** nach Eingabe eines Datensatzes einer Produktvariante, bevorzugt einer Produktnummer, in eine Eingabeeinrichtung (E) eine mittels produktspezifischen Trainingsdatensätzen zuvor eingelernte Produkthierarchie dazu verwendet wird, Kategorien der Produktvariante zu ermitteln,
wobei die Produkthierarchie einer Baumstruktur mit mindestens zwei Ebenen entspricht, deren Knoten durch Klassifikator ML Modelle gekennzeichnet sind, an deren Ausgängen Wahrscheinlichkeiten von Kategorien der darauffolgenden Ebene vorausgesagt werden,
- **dass** basierend auf einer Analyse des Produktdatensatzes Eingangsvektoren für einen ersten Knoten mit dem ersten Klassifikator Modell erzeugt werden,
- **dass** am Ausgang des Modells die Wahrscheinlichkeiten der Kategorien der darauffolgenden Ebene vorausgesagt werden, wobei für die Kategorie mit der höchsten Wahrscheinlichkeit eine relevante Untermenge der Eingangsvektoren als Eingangsvektoren für den nächsten Knoten verwendet wird,
- **dass** der Vorgang so lange wiederholt wird, bis ein Endknoten erreicht ist, der der anhand der Produktnummer ermittelten Produktvariante entspricht, und
- **dass** die im Zusammenhang mit dem Endknoten ermittelte produktspezifische Information der Produktvariante einem Anwender auf einer Ausgabeeinrichtung (A) ausgegeben wird.

2. Verfahren nach Anspruch 1,
**dadurch gekennzeichnet,**
**dass** Datensätze von Produktvarianten hinsichtlich Separierungsmerkmalen untersucht und mittels dieser in Teile aufgeteilt werden, dass Eigenschaften dieser Teile ermittelt und Ähnlichkeiten zwischen den Teilen bestimmt werden, dass auf den Ähnlichkeitswerten basierend Statistiken erstellt werden, woraus die Komponenten der Eingangsvektoren für die Klassifikator Modelle ermittelt werden.

3. Verfahren nach Anspruch 1,
**dadurch gekennzeichnet,**
**dass** zum Einlernen der Produkthierarchie eine Vielzahl von Datensätzen von Produktvarianten als Trainingsdatensätze verwendet werden,
- **dass** basierend auf einer Analyse jedes Trainingsdatensatzes die entsprechenden Eingangsvektoren erzeugt werden
- **dass** alle Eingangsvektoren und Kategorien der darauffolgenden Ebene als Labels auf den ersten Knoten mit dem ersten Klassifikator Modell angewandt werden,
- **dass** am Ausgang des Modells die Wahrscheinlichkeiten der Kategorien der darauffolgenden Ebene vorausgesagt werden,
- **dass** entsprechend der ermittelten Wahrscheinlichkeiten ein Subset der Eingangsvektoren und die entsprechenden Labels auf die folgenden Knoten angewandt werden und dieser Vorgang für alle Knoten und Ebenen so lange wiederholt wird, bis in der untersten Ebene der Produkthierarchie die Wahrscheinlichkeiten für alle Kategorien bestimmt sind.

4. Verfahren nach einem der vorhergehenden Ansprüche, **dadurch gekennzeichnet,**
**dass** für das Klassifikator Modell ein Random Forrestoder einen Gradient Booster Klassifikationsalgorithmus verwendet wird.

5. Verfahren nach einem der vorhergehenden Ansprüche, **dadurch gekennzeichnet,**
**dass** Informationen im Zusammenhang mit allen Produktvarianten in einer Datenbank gespeichert werden und der der Speicherplatz mit dem Pfad durch die Produkthierarchie verknüpft ist.

6. Verfahren nach einem der vorhergehenden Ansprüche, **dadurch gekennzeichnet,**
**dass** die im Zusammenhang mit einer Produktnummer ermittelte Position in der Produkthierarchie und/oder die Produkthierarchie selbst als Baumdiagramm und/oder mindestens ein ermittelter Pfad zu einem Knoten einem Anwender ausgegeben wird.

7. System (S) zur Handhabung von produktspezifischen Informationen für ein Produktsystem, umfassend
- mindestens eine Eingabeeinrichtung (E) zur Eingabe eines Datensatzes einer Produktvariante, bevorzugt einer Produktnummer, und mindestens einer Ausgabeeinrichtung (A) zur Ausgabe von produktspezifischen Informationen, welche im Zusammenhang mit dem Eingabedatensatz stehen, und
- mindestens einen Prozessor, der dafür konfiguriert ist, mindestens eine Anwendungssoftwarekomponente (AS) aus einem Speicher (M) in Interaktion mit einer Datenbank (DB) auszuführen, wobei die Anwendungssoftwarekomponente (AS) Verfahrensschritte gemäß einem der Ansprüche 1 bis 7 durchführt.

8. Anwendungssoftware (AS) mit durch einen Computer ausführbaren Programmcodeanweisungen zur Implementierung des Verfahrens nach einem der Ansprüche 1 bis 6, wenn die Software auf einem Computer ausgeführt wird.
